# EUROPÄISCHE PATENTSCHRIFT

(11) **EP 2 885 563 B1**
(45) Veröffentlichungstag und Bekanntmachung des Hinweises auf die Patenterteilung: **14.12.2016**
(21) Anmeldenummer: 13750262.1
(22) Anmeldetag: 23.07.2013
(51) Int. Cl.: F16K 1/42, F16K 1/38

(54) **HOCHDRUCKVENTIL**
HIGH-PRESSURE VALVE
SOUPAPE À HAUTE PRESSION

(30) Priorität: 17.08.2012 DE 102012016273; 21.08.2012 DE 102012016428
(43) Veröffentlichungstag der Anmeldung: 24.06.2015
(73) Patentinhaber: Uhde High Pressure Technologies GmbH, 58093 Hagen (DE)
(72) Erfinder: NÜNNERICH, Peter, 57080 Siegen (DE); KNAUF, Wilfried, 58313 Herdecke (DE); WEBER, Peter, 58097 Hagen (DE)
(74) Vertreter: ThyssenKrupp Intellectual Property GmbH
(86) Internationale Anmeldenummer: PCT/EP2013/002178
(87) Internationale Veröffentlichungsnummer: WO 2014/026727

(56) Entgegenhaltungen:
- WO-A1-03/016759
- WO-A1-2011/147078
- DE-A1- 19 931 891
- DE-A1-102009 032 850
- US-A- 5 694 973

## Beschreibung

Die vorliegende Erfindung betrifft ein Hochdruckventil, das eine Ventilspindel (6) und einen damit in Beziehung stehenden Ventilsitz (4) aufweist, das in einer Anlage zur Hochdruckbehandlung von Produkten eingesetzt wird.

Bei der Hochdruckbehandlung werden die Produkte in einer Hochdruckkammer, von einem Hochdruckmedium beaufschlagt, mit einem Druck bis zu 10 000 bar behandelt. Das Hochdruckmedium verlässt die Hochdruckkammer meistens gesteuert durch ein oder mehrere Hochdruckventile zu einem Auffangbehälter, wo das Hochdruckmedium gesammelt wird, während der Druck in der Hochdruckkammer reduziert wird.

In manchen Fällen wird zunächst der Druck schnell bis auf ca. 500 bar herabgesetzt, anschließend wird der Druck langsam bis auf Umgebungsdruck entspannt. Dies wird auch Schnell- und Softentspannung genannt. Die Druckabsenkung wird mittels verschiedener Druckventile zwischen der Hochdruckkammer und dem Auffangbehälter bewerkstelligt.

Bei der Schnell- und Softentspannung sind die Anforderungen an die Druckventile aufgrund der unterschiedlichen Drücke und Entspannungsgradienten verschieden.

Der Abbau sehr hoher Druckdifferenzen bei der Schnellentspannung führt oftmals zu einer sehr hohen Strömungsdynamik verbunden mit allen möglichen Strömungserosions-Prozessen, wie z. B. Kavitation, Wandreibungs- und Nassdampferosion, die die Ventilspindel (5) und den Ventilsitz (4), beschädigen. Daher wird angestrebt, eine Lösung für ein solches Problem zu finden.

Die Verringerung des Drucks in einer Hochdruckkammer mittels zwei Ventilen ist in WO 2006/129180 A1 offenbart. Dabei ist zum Auslassen des Hochdruckmediums aus der Hochdruckkammer eine Leitung mit zwei hintereinander geschalteten Druckventilen vorgesehen. Zwischen den beiden Druckventilen ist eine Zwischendruckkammer zur Aufnahme des Hochdruckmediums, um den Druck vom ersten Druckventil zum zweiten Druckventil schrittweise zu reduzieren und die Erosion an dem Druckventil zu verhindern. Nachteilig ist jedoch, dass die Taktzyklen dieses Verfahrens sehr lang sind. Außerdem ist das Ausführen des Verfahrens mit den Druckventilen aufwendig.

Die Schrift DE10 2009 042 088 A1 beschreibt eine Vorrichtung und ein Verfahren zur Hochdruckbehandlung von verpackten Lebensmitteln, wobei der Druckabbau in einer Hochdruckkammer in drei Phasen erfolgt. Zum Betreiben des Verfahrens ist eine Reihe von verschiedenen Druckventilen vorgesehen.

In der Schrift US 3010695 wird ein Hochdruck-Regelventil offenbart, bei dem die Regelcharakteristik durch einen durchströmbaren perforierten Ring mit unterschiedlich ausformbaren Öffnungen vorgegeben werden kann. Im Betrieb erfolgt die Regelung durch verschiedene Ventilspindel-Stellungen, wobei die Ventilspindel die Öffnungsflächen mehr oder weniger freigibt. Eine erosionsarme Drosselung der Strömung im Ringspalt zwischen dem perforierten Ring und der Ventilspindel ist nicht beabsichtigt und bei den gezeigten geometrischen Proportionen auch nicht möglich.

Die Schrift DE10 2009032850 A1 beschreibt ein Druckbegrenzungsventil bei dem sich die durch das Medium bewirkte Öffnungskraft sprungartig erhöht, dies wird unter anderem durch eine sprungartigen Vergrößerung des wirksamen Durchströmungsquerschnitts hinter der Dichtfläche des Ventilsitzes erreicht. Das Problem der Erosion durch die dabei entstehende hochdynamische Strömung ist nicht Inhalt des Patentes.

Eine getrennte Konstruktion des Hochdruckventils offenbart DE 44 38 462 C1, wobei es sich um ein Bolzen-Nadel-Ventil mit "weicher Spitze", das für Fluidsysteme bis ca. 1400 bar gedacht ist, handelt. Das Hochdruckventil weist eine Stopfbüchse mit einer darin angeordneten Druckhilfskammer auf, einen Körper mit einem Einlass und einem Auslass, sowie einem Sitz zwischen dem Einlass und dem Auslass. Ein Kolben ist in der Druckhilfskammer angeordnet. Der Schaft weist eine seitliche Stütze mit einer weichen Schaftspitze auf und ist konzentrisch durchbohrt, um den Fluiddruck vom Einlass mit der Oberseite des Kolbens zu verbinden, wodurch der Kolben den Schaft und die weiche Ventilspitze in Richtung des Ventilsitzes bewegt und somit die Stellkräfte reduziert und variiert werden können. Das Problem der Erosion durch hochdynamische Strömungen wird von diesem Patent nicht angesprochen.

Aufgrund der hohen Gesamtdrücke und auch der Druckdifferenzen können in dem hier angestrebten Arbeitsbereich bis zum 10 000 bar nur Ventilspindeln und -sitze aus hochfesten Materialien verwendet werden.

Um das vorliegende Problem zu beheben, würde man automatisch versuchen, ein härteres Material für die Ventilspindel und Ventilsitz einzusetzen. Dies führt zwar zu einem verbesserten Ergebnis im Vergleich zu der Ventilspindel und Ventilsitz mit weicheren Materialien. Aber aufgrund der Erosionsbelastung bei jedem Entspannungszyklus, die das Hochdruckmedium beim Durchströmen auf die Ventilspindel und Ventilsitze bewirkt, ist ein häufiger Austausch der Komponenten weiterhin unvermeidbar.

Ein Vermeiden der kritischen hochdynamischen Strömungszustände lässt sich durch vor- und/ oder nachgeschaltete Strömungswiderstände erreichen, wobei jedoch die Entspannungsgeschwindigkeit stark reduziert wird. Dies ist aber bei zeitkritischen Anwendungen unerwünscht.

Bei der Konstruktion eines Hochdruckventils, müssen insbesondere die Ventilspindel und der Ventilsitz, bezüglich der verwendeten Materialpaarungen und auch der Gestalt der Komponenten aufeinander abgestimmt sein.

Der Erfindung liegt daher das Problem zugrunde, ein konstruktiv einfaches Hochdruckventil bei der Hochdruckbehandlung von Produkten bis zu 10 000 bar Druck zur Verfügung zu stellen, womit eine höhere Verschleißzyklenzahl erzielt wird.

Die Aufgabe wird gelöst durch ein Hochdruckventil für eine Anlage zur Hochdruckbehandlung von Produkte in einer Hochdruckkammer, wobei die Produkten von einem Hochdruckmedium beaufschlagt, mit einem Druck bis zu 10 000 bar behandelt werden, aufweisend
- einen Ventilkörper (1) mit einem Einlass (2) und einem Auslass (3),
- einen Ventilsitz (4) zwischen dem Einlass (2) und Auslass (3),
- wobei der Ventilsitz (4) eine Einlassseite des Ventilsitzes (4a) und eine Auslassseite des Ventilsitzes (4b) aufweist, und die Einlassseite des Ventilsitzes (4a) den Einlass (2) ausbildet,
- eine Bohrung (8) innerhalb des Ventilsitzes (4), durch die das Hochdruckmedium bei der Offenstellung des Hochdruckventils vom Einlass (2) bis zum Auslass (3) strömt,
- eine Ventilspindel (5), wobei die Ventilspindelspitze (6) einen Teil der Ventilspindel (5) bildet, und
- wobei die Ventilspindelspitze (6) den Ventilsitz (4) von der Einlassseite des Ventilsitzes (4a) bis in die Auslassseite des Ventilsitzes (4b) im geschlossenen Zustand des Hochdruckventils abdichtet,
- wobei die Ventilspindelspitze (6) ein kegelförmiges Ende (11) und einen Schaft (12) aufweist,
- der Ventilsitz (4) eine konzentrische Senkbohrung (10) aufweist,
- wobei die konzentrische Senkbohrung (10) in Richtung der Einlassseite des Ventilsitzes (4a) eine konische Fläche (13) aufweist,
- und die konzentrische Senkbohrung (10) in Richtung der Auslassseite des Ventilsitzes (4b) eine Schaft-Gegenfläche (15) mit einer zylindrischen Form oder einer konischen Form mit einem Winkel bis zu 6° Neigung in Bezug auf die Achse des Ventilsitzes (4) aufweist,
- wobei das kegelförmige Ende (11) der Ventilspindelspitze (6) gegen die konische Fläche (13) der Senkbohrung (10) des Ventilsitzes (4) in geschlossenen Zustand des Hochdruckventils abdichtet und der Schaft (12) der Ventilspindelspitze (6) mit der Schaft-Gegenfläche (15) des Ventilsitzes (4) einen Spalt bildet.

Damit das Hochdruckventil im geschlossenen Zustand bestens abdichtet, muss die Kontaktfläche, zwischen dem kegelförmige Ende (11) derVentilspindelspitze (6) und die konische Fläche (13) der Senkbohrung (10) des Ventilsitzes (4) optimal abgestimmt werden. Die Spitze des kegelförmigen Endes (11) der Ventilspindelspitze (6) ragt in die Bohrung (8) des Ventilsitzes (4) hinein.

Während des Öffnens des Hochdruckventils sind verschiedene ineinander übergehende Entspannungszustände zu unterscheiden. Zunächst erfolgt der Druckabbau im Spalt zwischen der Ventilspindelspitze (6) und der konischen Fläche (13) der Senkbohrung (10), dann durch den Spalt zwischen dem Schaft der Ventilspindelspitze (12) und der Schaft-Gegenfläche (15) der Senkbohrung des Ventilsitzes (4). Bei weiter zunehmendem Öffnungsweg erfolgt der Druckabbau nur noch in zunehmender Weise in dem Spalt zwischen dem Schaft der Ventilspindelspitze (12) und der Schaft-Gegenfläche (15) der Senkbohrung des Ventilsitzes (4). Bei gänzlich aus der Senkbohrung (10) des Ventilsitzes (4) herausgefahrenen Ventilspindelspitze (6) stellen der Ventilsitz (4) und die Ventilspindelspitze (6) keinen relevanten Strömungswiderstand mehr dar. Der Druckabbau erfolgt nur noch im zu- und abführenden Leitungssystem.

Die Schaft-Gegenfläche (15) der Senkbohrung (10) des Ventilsitzes (4) kann als Konus mit einem Winkel bis zu 6° Neigung in Bezug auf die Achse des Ventilsitzes (4) ausgebildet sein, um die Spaltströmung auf die Erfordernisse einzustellen. Da der Ventilsitz (4) und die Ventilspindelspitze (6) eine zusammenwirkende Einheit des Hochdruckventils bilden, kann der Schaft (12) der Ventilspindelspitze (6) zylindrisch oder konisch mit einem Winkel bis zu 6° Neigung in Bezug auf die Achse der Ventilspindelspitze (6) ausgeführt sein.

Zusätzlich können seitliche Bohrungen (9) im Ventilsitz (4) eingebracht werden, um den Strömungswiderstand der Ventilsitz-Ventilspindel-Kombination optimal anzupassen.

Der Kopfteil der Ventilspindel (5) ist durch die Ventilspindelspitze (6) ausgebildet. Da eine hohe Anforderung an den Kopfteil der Ventilspindel (5) nämlich die Ventilspindelspitze (6) gestellt wird, und z. B. die Ventilspindelspitze (6) aus einem anderen Material als dem der Ventilspindel (5) bestehen kann, ist es vorteilhaft, dass die Ventilspindel (5) und die Ventilspindelspitze (6) nicht zusammen als ein Teil hergestellt werden. Dies kann so ausgeführt werden, dass die Ventilspindelspitze (6) als austauschbares separates Bauteil ausgeführt wird, und die Ventilspindel (5) eine innere Bohrung aufweist, in der der Schaft (12) der Ventilspindelspitze (6) aufgenommen wird.

Der Neigungswinkelunterschied zwischen der konischen Fläche (13) und des kegelförmigen Ende (11) darf maximal 4° betragen, damit wird die konische Fläche (13) optimal von dem kegelförmigen Ende (11) der Ventilspindelspitze (6) abgedichtet.

Hinsichtlich der hohen Anforderung an das Hochdruckventil werden der Ventilsitz (4) und die Ventilspindelspitze (6) generell aus hochfesten Materialien, wie Metalllegierungen, hergestellt.

Der Ventilkörper (1) und der Ventilsitz (4) bilden eine Ventilkammer, in der ein Ventilkammerschutz (14) vorgesehen werden kann. Der Ventilkammerschutz (14) schützt die innere Oberfläche der Ventilkammer vor Erosion. Bei Beschädigung des Ventilkammerschutzes (14) kann der Ventilkammerschutz (14) schnell und problemlos anstatt des gesamten Ventilkörpers (1) ausgetauscht werden.

Das Hochdruckventil kann, bestehend aus Ventilsitz (4) und Ventilspindel (5), eine Regeleinrichtung aufweisen, mit der die Bewegung der Ventilspindel (5) geregelt wird.

Natürlich ist die Regeleinrichtung sowohl manuell als auch maschinell steuerbar.

Die erfindungsgemäßen Teile werden durch nachfolgende Zeichnungen dargestellt.
Fig. 1 stellt ein Hochdruckventil dar.
Fig. 2 stellt eine Ausführungsform des Ventilsitzes (4) dar.
Fig. 3 stellt eine Ausführungsform der Ventilspindelspitze (6) dar.

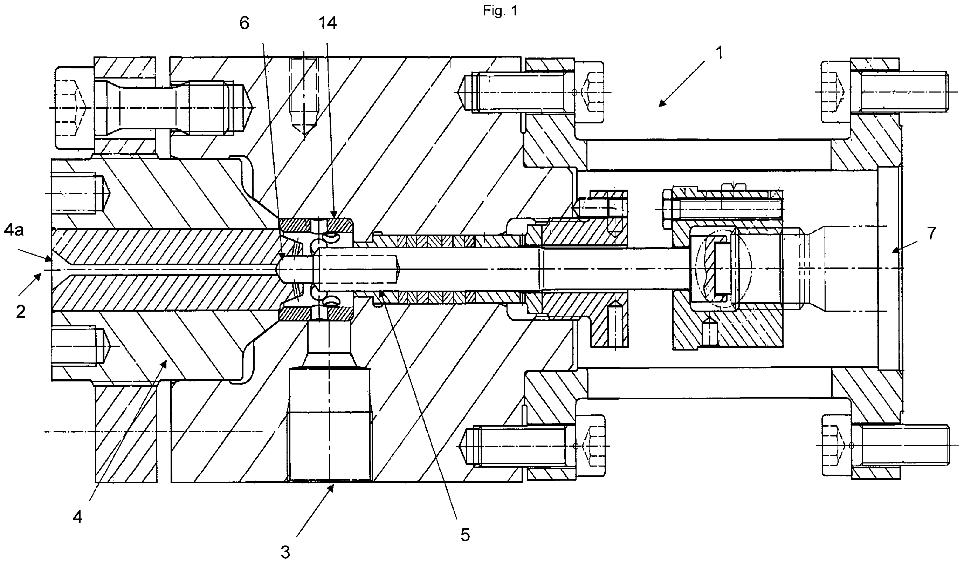

In Fig. 1 ist ein Hochdruckventil veranschaulicht, das einen Ventilkörper (1) aufweist. Der Ventilkörper (1) weist eine Ventilspindel (5) mit Ventilspindelspitze (6), einen damit in Beziehung stehenden Ventilsitz (4) und einen Einlass (2) und Auslass (3) auf. Der Ventilsitz (4) ist zwischen dem Einlass (2) und dem Auslass (3) angeordnet. Durch den Einlass (2) strömt das Hochdruckmedium, das die Hochdruckkammer verlässt, durch die Bohrung (8) des Ventilsitzes (4). Die Ventilspindelspitze (6) weist ein kegelförmiges Ende (11) und einen Schaft (12) auf, und die Ventilspindel (5) weist eine innere Bohrung auf, in der der Schaft (12) der Ventilspindelspitze (6) aufgenommen wird. Die Stellung der Ventilspindel (5) wird durch einen angebauten Ventil-Antrieb (7) bewerkstelligt.

Damit der Ventilsitz (4) und die Ventilspindelspitze (6) optimal im geschlossenen Zustand des Hochdruckventils abdichten, weist die konische Fläche des Ventilsitzes (13) eine axiale Abweichung α von ca. 45° und das kegelförmige Ende (11) der Ventilspindelspitze (6) eine axiale Abweichung von ca. 43.5° auf. Die Ventilspindel (5) samt der Ventilspindelspitze (6) wird mittels des Antriebs vom Ventilsitz (4) entfernt, das Hochdruckmedium strömt zwischen dem Ventilsitz (4) und der Ventilspindelspitze (6) in die Richtung des Auslasses (3). Ventilkörper (1) und Ventilsitz (4) bilden eine sogenannte Ventilkammer. Die innere Oberfläche der Ventilkammer kann zusätzlich durch einen Ventilkammerschutz (14) vor Erosion geschützt werden.

Versuche haben gezeigt, dass mit dem oben erläuterten erfindungsgemäßen Hochdruckventil bei der Hochdruckbehandlung von Produkten bis zu 10 000 bar über 5000 Taktzyklen / Verschleißzyklenzahl erzielt werden können.

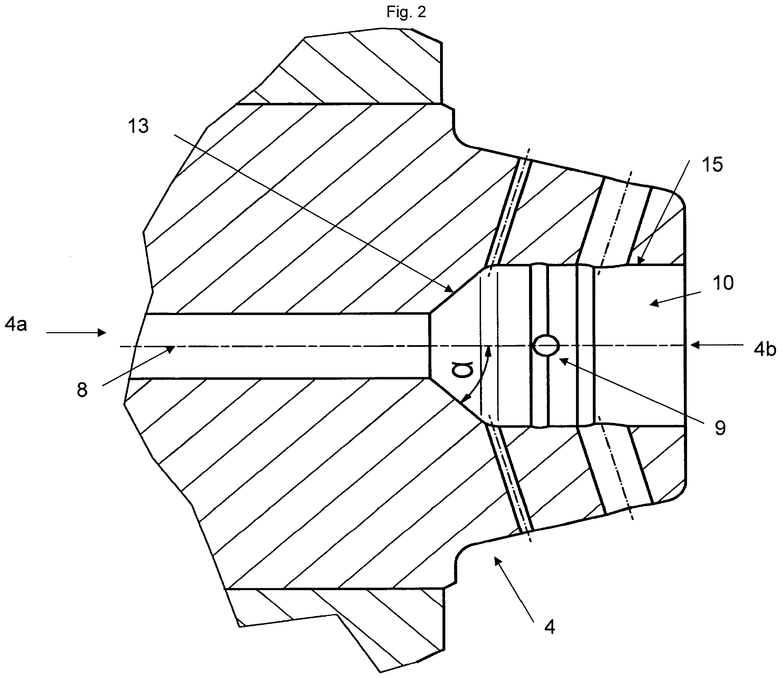

Fig. 2 ist eine detaillierte Darstellung vom Ventilsitz (4). Aus ökonomischen Gründen kann der Ventilsitz (4) aus mehreren Teilen bestehen, die ineinander montiert werden, wobei der Ventilsitz (4) eine Einlassseite des Ventilsitzes (4a) und eine Auslassseite des Ventilsitzes (4b) aufweist, und die Einlassseite des Ventilsitzes (4a) den Einlass (2) ausbildet. Mehrere seitliche Bohrungen (9) sind in der Schaft-Gegenfläche (15) der Senkbohrung (10) angebracht. Idealerweise sind auch seitliche Bohrungen (9) auf dem Übergang von der konischen Fläche (13) zur Schaft-Gegenfläche (15) der Senkbohrung (10) angeordnet.

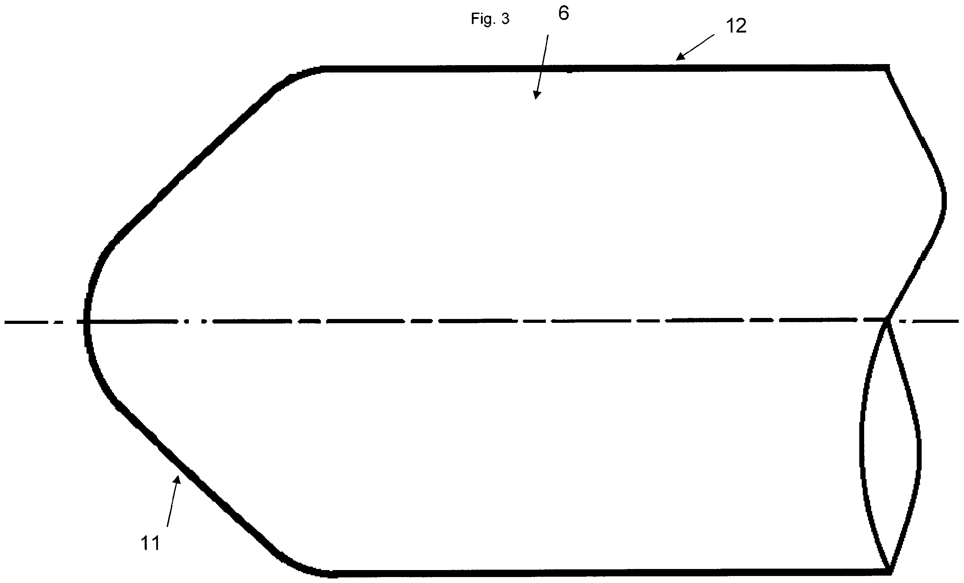

Fig. 3 zeigt eine mögliche Ausführungsoption der Ventilspindelspitze (6), wobei hier das kegelförmige Ende (11) der Ventilspindelspitze (6) eine geringere axiale Abweichung gegenüber der abzudichtenden konischen Fläche (13) des Ventilsitzes (4) aufweist, damit das kegelförmige Ende (11) der Ventilspindelspitze (6) der konischen Fläche (13) des Ventilsitzes (4) unter hohem Druck optimal abdichtet.

### Bezugszeichenliste:

- 1: Ventilkörper
- 2: Einlass
- 3: Auslass
- 4: Ventilsitz
- 4a: Einlassseite des Ventilsitzes
- 4b: Auslassseite des Ventilsitzes
- 5: Ventilspindel
- 6: Ventilspindelspitze
- 7: Angebauter Ventil-Antrieb
- 8: Bohrung
- 9: Seitliche Bohrung
- 10: Senkbohrung des Ventilsitzes
- 11: Kegelförmiges Ende der Ventilspindelspitze
- 12: Schaft der Ventilspindelspitze
- 13: Konische Fläche der Senkbohrung
- 14: Ventilkammerschutz
- 15: Schaft-Gegenfläche der Senkbohrung

## Patentansprüche

1. Hochdruckventil für eine Anlage zur Hochdruckbehandlung von Produkten in einer Hochdruckkammer, wobei die Produkte von einem Hochdruckmedium beaufschlagt, mit einem Druck bis zu 10 000 bar behandelt werden, aufweisend
• einen Ventilkörper (1) mit einem Einlass (2) und einem Auslass (3),
• einen Ventilsitz (4) zwischen dem Einlass (2) und Auslass (3),
• wobei der Ventilsitz (4) eine Einlassseite des Ventilsitzes (4a) und eine Auslassseite des Ventilsitzes (4b) aufweist, und die Einlassseite des Ventilsitzes (4a) den Einlass (2) ausbildet,
• eine Bohrung (8) innerhalb des Ventilsitzes (4), durch die das Hochdruckmedium bei der Offenstellung des Hochdruckventils vom Einlass (2) bis zum Auslass (3) strömt,
• eine Ventilspindel (5), wobei die Ventilspindelspitze (6) einen Teil der Ventilspindel (5) bildet, und
• wobei die Ventilspindelspitze (6) den Ventilsitz (4) von der Einlassseite des Ventilsitzes (4a) bis in die Auslassseite des Ventilsitzes (4b) im geschlossenen Zustand des Hochdruckventils abdichtet,
**dadurch gekennzeichnet, dass**
• die Ventilspindelspitze (6) ein kegelförmiges Ende (11) und einen Schaft (12) aufweist,
• der Ventilsitz (4) eine konzentrische Senkbohrung (10) aufweist,
• wobei die konzentrische Senkbohrung (10) in Richtung der Einlassseite des Ventilsitzes (4a) eine konische Fläche (13) aufweist,
• und die konzentrische Senkbohrung (10) in Richtung der Auslassseite des Ventilsitzes (4b) eine Schaft-Gegenfläche (15) mit einer zylindrischen Form oder einer konischen Form mit einem Winkel bis zu 6° Neigung in Bezug auf die Achse des Ventilsitzes (4) aufweist,
• wobei das kegelförmige Ende (11) der Ventilspindelspitze (6) gegen die konische Fläche (13) der Senkbohrung (10) des Ventilsitzes (4) in geschlossenen Zustand des Hochdruckventils abdichtet und der Schaft (12) der Ventilspindelspitze (6) mit der Schaft-Gegenfläche (15) des Ventilsitzes (4) einen Spalt bildet.

2. Hochdruckventil nach Anspruch 1, **dadurch gekennzeichnet, dass** der Schaft (12) der Ventilspindelspitze (6) zylindrisch oder konisch mit einem Winkel bis zu 6° Neigung in Bezug auf die Achse der Ventilspindelspitze (6) ausgeführt ist.

3. Hochdruckventil nach Anspruch 1 oder 2, **dadurch gekennzeichnet, dass** der Kopfteil der Ventilspindel (5) durch die Ventilspindelspitze (6) ausgebildet ist.

4. Hochdruckventil nach Anspruch 3, **dadurch gekennzeichnet, dass** die Ventilspindelspitze (6) als austauschbares separates Bauteil ausgeführt wird, wobei die Ventilspindel (5) eine innere Bohrung aufweist, in der der Schaft (12) der Ventilspindelspitze (6) aufgenommen wird.

5. Hochdruckventil nach einem der vorangegangenen Ansprüche, **dadurch gekennzeichnet, dass** der Ventilsitz (4) in der Senkbohrung (10) seitliche Bohrungen (9) aufweist.

6. Hochdruckventil nach einem der vorangegangenen Ansprüche, **dadurch gekennzeichnet, dass** der Neigungswinkelunterschied zwischen der konischen Fläche (13) und des kegelförmigen Ende (11) maximal 4° beträgt.

7. Hochdruckventil nach einem der vorangegangenen Ansprüche, **dadurch gekennzeichnet, dass** der Ventilkörper (1) und der Ventilsitz (4) eine Ventilkammer bilden, in der ein Ventilkammerschutz (14) vorgesehen ist.

8. Hochdruckventil nach einem der vorangegangenen Ansprüche, **dadurch gekennzeichnet, dass** das Hochdruckventil eine Regeleinrichtung aufweist, mit der die Bewegung der Ventilspindel (5) geregelt wird.

9. Hochdruckventil nach Anspruch 8, **dadurch gekennzeichnet, dass** die Regeleinrichtung sowohl manuell als auch maschinell steuerbar ist.

## Claims

1. High-pressure valve for an installation for the high-pressure treatment of products in a high-pressure chamber, wherein the products, acted on by a high-pressure medium, are treated at a pressure of up to 10 000 bar, having
- a valve body (1) with an inlet (2) and an outlet (3),
- a valve seat (4) between the inlet (2) and the outlet (3),
- wherein the valve seat (4) has an inlet side of the valve seat (4a) and an outlet side of the valve seat (4b), and the inlet side of the valve seat (4a) forms the inlet (2),
- a bore (8) within the valve seat (4), through which bore the high-pressure medium flows from the inlet (2) to the outlet (3) when the high-pressure valve is in the open position,
- a valve spindle (5), wherein the valve spindle tip (6) forms a part of the valve spindle (5), and
- wherein the valve spindle tip (6) seals off the valve seat (4) from the inlet side of the valve seat (4a) to the outlet side of the valve seat (4b) when the high-pressure valve is in the closed state,
**characterized in that**
- the valve spindle tip (6) has a cone-shaped end (11) and a shank (12),
- the valve seat (4) has a concentric counterbore (10),
- wherein the concentric counterbore (10) has, in the direction of the inlet side of the valve seat (4a), a conical surface (13),
- and the concentric counterbore (10) has, in the direction of the outlet side of the valve seat (4b), a shank counterpart surface (15) with a cylindrical form or a conical form with an angle of up to 6° inclination with respect to the axis of the valve seat (4),
- wherein the cone-shaped end (11) of the valve spindle tip (6) seals off against the conical surface (13) of the counterbore (10) of the valve seat (4) when the high-pressure valve is in the closed state, and the shank (12) of the valve spindle tip (6) forms a gap with the shank counterpart surface (15) of the valve seat (4).

2. High-pressure valve according to Claim 1, **characterized in that** the shank (12) of the valve spindle tip (6) is of cylindrical form or conical form with an angle of up to 6° inclination with respect to the axis of the valve spindle tip (6).

3. High-pressure valve according to Claim 1 or 2, **characterized in that** the head part of the valve spindle (5) is formed by the valve spindle tip (6).

4. High-pressure valve according to Claim 3, **characterized in that** the valve spindle tip (6) is formed as an exchangeable separate component, wherein the valve spindle (5) has an internal bore in which the shank (12) of the valve spindle tip (6) is received.

5. High-pressure valve according to one of the preceding claims, **characterized in that** the valve seat (4) in the counterbore (10) has lateral bores (9).

6. High-pressure valve according to one of the preceding claims, **characterized in that** the difference in inclination angle between the conical surface (13) and the cone-shaped end (11) is at most 4°.

7. High-pressure valve according to one of the preceding claims, **characterized in that** the valve body (1) and the valve seat (4) form a valve chamber in which a valve chamber protection means (14) is provided.

8. High-pressure valve according to one of the preceding claims, **characterized in that** the high-pressure valve has a regulation device by means of which the movement of the valve spindle (5) is regulated.

9. High-pressure valve according to Claim 8, **characterized in that** the regulation device is both manually and mechanically controllable.

## Revendications

1. Soupape à haute pression pour une installation de traitement haute pression de produits dans une chambre à haute pression, les produits, sollicités par un milieu haute pression, étant traités avec une pression allant jusqu'à 10000 bars, présentant
- un corps de soupape (1) avec une entrée (2) et une sortie (3),
- un siège de soupape (4) entre l'entrée (2) et la sortie (3),
- le siège de soupape (4) présentant un côté d'entrée du siège de soupape (4a) et un côté de sortie du siège de soupape (4b), et le côté d'entrée du siège de soupape (4a) constituant l'entrée (2),
- un alésage (8) à l'intérieur du siège de soupape (4), à travers lequel le fluide sous pression s'écoule dans la position ouverte de la soupape à haute pression depuis l'entrée (2) jusqu'à la sortie (3),
- une broche de soupape (5), la pointe de broche de soupape (6) formant une partie de la broche de soupape (5), et
- la pointe de broche de soupape (6) étanchéifiant le siège de soupape (4) depuis le côté d'entrée du siège de soupape (4a) jusque dans le côté de sortie du siège de soupape (4b) dans l'état fermé de la soupape à haute pression,
**caractérisée en ce que**
- la pointe de broche de soupape (6) présente une extrémité conique (11) et une tige (12),
- le siège de soupape (4) présente un trou borgne concentrique (10),
- le trou borgne concentrique (10) présentant une surface conique (13) dans la direction du côté d'entrée du siège de soupape (4a),
- et le trou borgne concentrique (10) présente, dans la direction du côté de sortie du siège de soupape (4b), une surface conjuguée de tige (15) avec une forme cylindrique ou une forme conique formant un angle allant jusqu'à 6° d'inclinaison par rapport à l'axe du siège de soupape (4),
- l'extrémité conique (11) de la pointe de broche de soupape (6) réalisant l'étanchéité vis-à-vis de la surface conique (13) du trou borgne (10) du siège de soupape (4) dans l'état fermé de la soupape à haute pression et la tige (12) de la pointe de broche de soupape (6) formant une fente avec la surface conjuguée de tige (15) du siège de soupape (4).

2. Soupape à haute pression selon la revendication 1, **caractérisée en ce que** la tige (12) de la pointe de broche de soupape (6) est réalisée sous forme cylindrique ou conique avec un angle allant jusqu'à 6° d'inclinaison par rapport à l'axe de la pointe de broche de soupape (6).

3. Soupape à haute pression selon la revendication 1 ou 2, **caractérisée en ce que** la partie de tête de la broche de soupape (5) est réalisée par la pointe de broche de soupape (6).

4. Soupape à haute pression selon la revendication 3, **caractérisée en ce que** la pointe de broche de soupape (6) est réalisée sous forme de composant séparé remplaçable, la broche de soupape (5) présentant un trou interne dans lequel est reçue la tige (12) de la pointe de broche de soupape (6).

5. Soupape à haute pression selon l'une quelconque des revendications précédentes, **caractérisée en ce que** le siège de soupape (4) présente des trous latéraux (9) dans le trou borgne (10).

6. Soupape à haute pression selon l'une quelconque des revendications précédentes, **caractérisée en ce que** la différence d'angle d'inclinaison entre la surface conique (13) et l'extrémité conique (11) est au maximum de 4°.

7. Soupape à haute pression selon l'une quelconque des revendications précédentes, **caractérisée en ce que** le corps de soupape (1) et le siège de soupape (4) forment une chambre de soupape dans laquelle est prévue une protection de chambre de soupape (14).

8. Soupape à haute pression selon l'une quelconque des revendications précédentes, **caractérisée en ce que** la soupape à haute pression présente un dispositif de réglage avec lequel le mouvement de la broche de soupape (5) est réglé.

9. Soupape à haute pression selon la revendication 8, **caractérisée en ce que** le dispositif de réglage peut être commandé à la fois manuellement et par machine.
